# EUROPEAN PATENT APPLICATION

(11) **EP 4 647 207 A1**
(43) Date of publication of application: **12.11.2025**
(21) Application number: 24887689.8
(22) Date of filing: 10.10.2024
(51) Int. Cl.: B23K 35/26

(54) **HIGH-STRENGTH THERMAL-FATIGUE-RESISTANT LEAD-FREE SOLDER ALLOY AND PREPARATION METHOD THEREFOR**

(30) Priority: 10.11.2023 CN 202311497006
(71) Applicant: SUZHOU EUNOW COMPANY LIMITED, Suzhou, Jiangsu 215152 (CN)
(72) Inventor: LUO, Dengjun, Suzhou, Jiangsu 215152 (CN); CHEN, Qin, Suzhou, Jiangsu 215152 (CN)
(74) Representative: Ullrich & Naumann PartG mbB
(86) International application number: PCT/CN2024/123884
(87) International publication number: WO 2025/098076

(57) **Abstract**

A high-strength and thermal-fatigue-resistant lead-free solder alloy and a preparation method thereof. The high-strength and thermal-fatigue-resistant lead-free solder alloy includes the following components by mas percentage: 2.5-4% of silver; 0.5-1% of copper; 3-3.5% of bismuth; and 2.5-4% of antimony; and further includes 0.01-0.05% of nickel and 0.04-0.1% of neodymium; or/and 0.02-0.1% of manganese and 0.01-0.05% of cobalt; and the balance being tin and any unavoidable impurities. The method for preparing the lead-free solder alloy includes: mixing the components according to the mass percentages, melting, and performing heat preservation and stirring on a resulting mixture to obtain the lead-free solder alloy. The high-strength and thermal-fatigue-resistant lead-free solder alloy has excellent thermal fatigue resistance.

## Description

### TECHNICAL FIELD

The present application relates to the field of lead-free solder alloys, and in particular, to a high-strength and thermal-fatigue-resistant lead-free solder alloy and a preparation method thereof.

### BACKGROUND ART

Tin alloy solders are widely used in electronic packaging structures due to their active properties. With the development of multifunctional and high-density integration in the semiconductor industry, the reliability requirements for industrial electronic packaging have become more stringent. Especially in the fields of aerospace or automotive electronics, electronic devices have longer service life and will serve in relatively harsh environments such as high temperatures or vibrations, which requires the connection solder joints to meet the requirements of long-term high-temperature and high-load service.

The current mainstream connector solder is Sn3.0Ag0.5Cu alloy (SAC305). The SAC305 alloy has better thermal fatigue resistance, but has reliability limitation under the action of higher temperature and thermal stress for a long time. The strengthening of SAC305 alloy mainly depends on the compound Ag₃Sn phase and Cu₆Sn₅ phase. In the power cycling or long-time high-temperature service or vibration of the solder joints strengthened by these two phases, the Ag₃Sn phase and Cu₆Sn₅ phase are subjected to coarsening, which diminishes their capacity to impede dislocation motion and accumulate damage, leading to the recrystallization of the tin crysta matrix in the high-stress regions, and progressively leading to cracking over the service time. Especially due to the interaction of overall structural stress, thermal stress and other factors, the interface near the high-strain regions becomes a weak link in the interconnection structure, which is prone to cracking and leads to the failure of the entire packaging structure.

Therefore, it is urgent to develop a solder alloy with high strength, high toughness and excellent thermal fatigue resistance.

### SUMMARY

In order to improve the thermal fatigue resistance of the lead-free solder alloy, the present application provides a high-strength and thermal-fatigue-resistant lead-free solder alloy and a preparation method thereof.

In a first aspect, the present application provides a high-strength and thermal-fatigue-resistant lead-free solder alloy, adopting the following technical solution:
A high-strength and thermal-fatigue-resistant lead-free solder alloy, which includes the following components by mass percentage:
2.5-4% of silver; 0.5-1% of copper; 3-3.5% of bismuth; 2.5-4% of antimony; and further includes:
0-0.05% of nickel and one or more selected from 0-0.1% of neodymium, 0-0.1% of lanthanum, 0-0.1% of plutonium, and 0-0.1% of yttrium; or/and, 0-0.1% of manganese and one or more selected from 0-0.05% of cobalt and 0-0.05% of titanium;
and the balance being tin and any unavoidable impurities.

By adopting the above technical solution, metallic silver can enhance the mechanical strength, thermal and electrical conductivity, increase the elongation rate and improve the vibration fracture resistance of the lead-free solder alloy, as well as enhance the fatigue resistance of the solder alloy under thermal cycling conditions; metallic copper can enhance the wettability and the fatigue resistance under thermal cycling conditions of the lead-free solder alloy, as well as improve the thermal and electrical conductivity of the lead-free solder alloy; metallic bismuth helps to lower the melting point and is conducive to increasing the hardness, tensile strength, and shear strength of the lead-free solder alloy; and metallic antimony is conducive to improving the ductility, increasing the elongation rate, and improving the tensile strength of the lead-free solder alloy.

In the present application, the silver, copper, bismuth, antimony and tin elements are combined, and by selecting nickel in combination with one or more elements selected from neodymium, lanthanum, plutonium, and yttrium as the solder joint/ interface control elements, or selecting manganese in combination with one or more elements selected from cobalt and titanium as the solder joint/interface control elements, the control over both the interior and interface of the solder joint in the lead-free solder alloy is achieved, which is beneficial to reducing the degree of undercooling during the solidification process of the lead-free solder alloy, making the microstructure morphology of the lead-free solder alloy more delicate and uniform; making the compound formed at the interface between the lead-free solder alloy and the metallic copper substrate more stable microscopically, making the transformation from Cu₆Sn₅ to Cu₃Sn less likely to occur during service. Consequently, the possibility of growing and coarsening of the Cu₆Sn₅ during service is reduced, and the solder joint structure is stabilized macroscopically. At the same time, it is beneficial to improving the tensile strength of the lead-free solder alloy, enhancing the thermal cycling resistance ability, and thereby reducing the possibility of mechanical property degradation of the solder joint during thermal aging.

Preferably, the lead-free solder alloy includes the following components by mass percentage:
2.5-4% of the silver; 0.5-1% of the copper; 3-3.5% of the bismuth; 2.5-4% of the antimony; 0-0.05% of the nickel; and one or more selected from 0-0.1% of the neodymium, 0-0.1% of the lanthanum, 0-0.1% of the plutonium, and 0-0.1% of the yttrium; and the balance being the tin and any unavoidable impurities.

By adopting the above technical solution, nickel element is combined with one or more rare earth elements selected from neodymium, lanthanum, plutonium, and yttrium, which can effectively inhibit the formation of coarse bismuth phase in the solder alloy during the cooling process, thereby refining the grains and improving the mechanical and anti-aging properties of the lead-free solder alloy; at the same time, the rare earth elements can refine the grains of the lead-free solder alloy and improve the strength and ductility of the lead-free solder alloy.

Preferably, the lead-free solder alloy includes the following components by mass percentage: 2.5-4% of the silver; 0.5-1% of the copper; 3-3.5% of the bismuth; 2.5-4% of the antimony; 0-0.05% of the nickel; 0-0.1% of the neodymium; and the balance being the tin and any unavoidable impurities.

Preferably, the mass percentage of the nickel is 0-0.02%, and the mass percentage of the neodymium is 0.04-0.06%.

By adopting the above technical solution, the lead-free solder alloy exhibits a high melting point, better thermal fatigue resistance, better high-temperature mechanical reliability and solder joint strength.

Preferably, the lead-free solder alloy includes the following components by mass percentage: 2.5-4% of the silver; 0.5-1% of the copper; 3-3.5% of the bismuth; 2.5-4% of the antimony; 0-0.1% of the manganese; and one or more selected from 0-0.05% of the cobalt and 0-0.05% of the titanium; and the balance being the tin and any unavoidable impurities.

By adopting the above technical solution, manganese element is combined with one or more elements selected from cobalt and titanium, which can effectively improve the toughness and tensile strength and enhance the thermal fatigue life of the lead-free solder alloy, and at the same time, can effectively inhibit the formation of coarse bismuth phase in the solder alloy during the cooling process, thereby refining the grains and improving the mechanical properties of the lead-free solder alloy.

Preferably, the lead-free solder alloy includes the following components by mass percentage: 2.5-4% of the silver; 0.5-1% of the copper; 3-3.5% of the bismuth; 2.5-4% of the antimony; 0-0.1% of the manganese; 0-0.05% of the cobalt; and the balance being the tin and any unavoidable impurities.

Preferably, the mass percentage of the manganese is 0.02-0.04%; and the mass percentage of the cobalt is 0-0.02%.

By adopting the above technical solution, the lead-free solder alloy exhibits a high melting point, better thermal fatigue resistance, better high-temperature mechanical reliability and solder joint strength.

By adopting the above technical solution, the mass percentage of various alloy elements is further optimized, enabling the lead-free solder alloy to have better thermal fatigue resistance and high-temperature mechanical reliability.

Preferably, a melting point of the lead-free solder alloy is 200-250 °C.

Preferably, a tensile strength of the lead-free solder alloy is not less than 80 MPa at 25 °C and not less than 50 MPa at 125 °C.

By adopting the above technical solution, the lead-free solder alloy of the present application exhibits better high-temperature mechanical strength, good high-temperature mechanical reliability, and better thermal fatigue resistance, thus enabling the lead-free solder alloy to be applied in scenarios with high operating temperatures.

In a second aspect, the present application provides a method for preparing the high-strength and thermal-fatigue-resistant lead-free solder alloy, adopting the following technical solution:
A method for preparing the high-strength and thermal-fatigue-resistant lead-free solder alloy, including the following steps:
mixing the components according to the mass percentages, melting, performing heat preservation and stirring a resulting mixture to obtain the lead-free solder alloy.

In summary, the present application has the following beneficial effects:
1. In the present application, the silver, copper, bismuth, antimony and tin elements are combined, and by selecting nickel in combination with one or more elements selected from neodymium, lanthanum, plutonium, and yttrium as the solder joint/ interface control elements, or selecting manganese in combination with one or more elements selected from cobalt and titanium as the solder joint/interface control elements, the control over both the interior and interface of the solder joint in the lead-free solder alloy is achieved, which is beneficial to reducing the degree of undercooling during the solidification process of the lead-free solder alloy, making the microstructure morphology of the lead-free solder alloy more delicate and uniform; making the compound formed at the interface between the lead-free solder alloy and the metallic copper substrate more stable microscopically, making the transformation from Cu₆Sn₅ to Cu₃Sn less likely to occur during service. Consequently, the possibility of growing and coarsening of the Cu₆Sn₅ during service is reduced, and the solder joint structure is stabilized macroscopically. At the same time, it is beneficial to improving the tensile strength of the lead-free solder alloy, enhancing the thermal cycling resistance ability, and thereby reducing the possibility of mechanical property degradation of the solder joint during thermal aging.
2. In the present application, it is preferable to use nickel element in combination with neodymium element as the solder joint/ interface control elements, or select the combination of manganese element and cobalt element as the solder joint/ interface control elements, so that the lead-free solder alloy exhibits a high melting point, better thermal fatigue resistance, better high-temperature mechanical reliability and solder joint strength.

### BRIEF DESCRIPTION OF THE DRAWINGS.

FIG. 1 is an electron microscope image of the microstructure of a lead-free solder alloy in Example 6 of the present application;
FIG. 2 is a DSC differential thermal analysis curve of the lead-free solder alloy in Example 6 of the present application;
FIG. 3 is an electron microscope image of the microstructure of a lead-free solder alloy in Example 16 of the present application;
FIG. 4 is a DSC differential thermal analysis curve of the lead-free solder alloy in Example 16 of the present application.

### DETAILED DESCRIPTION

The present application will be further described in detail below with reference to the drawings and Examples.

### Examples

### Example 1

This example discloses a high-strength and thermal-fatigue-resistant lead-free solder alloy, which included the following components by mass: 8.97 kg tin, 0.34 kg silver, 0.07 kg copper, 0.32 kg bismuth, and 0.3 kg antimony.

The method for preparing the high-strength and thermal-fatigue-resistant lead-free solder alloy included:
pure tin blocks with a purity greater than 99.9%, silver grains, copper grains, bismuth blocks, and antimony blocks were used as raw materials;
the copper grains of the above mass and pure tin blocks with a mass 9 times that of the copper grains were taken, then placed into a vacuum furnace at 600 °C for melting and the temperature was held for 2 h, the melting was repeated twice to obtain Sn10Cu master alloy;
the antimony blocks of the above mass and pure tin blocks with a mass 9 times that of the antimony blocks were taken, then placed into a vacuum furnace at 600 °C for melting and the temperature was held for 2 h, the melting was repeated twice to obtain Sn10Sb master alloy;
the silver grains of the above mass, Sn10Cu master alloy, bismuth blocks, Sn10Sb master alloy and the remaining pure tin blocks were placed into a resistance furnace at 300 °C for heating; after the materials were melted, a resulting mixture was stirred and held for 1 h to obtain the high-strength and thermal-fatigue-resistant lead-free solder alloy.

The lead-free solder alloy prepared in the present application can be represented as Sn3.4Ag0.7Cu3.2Bi3.0Sb, where each number indicates the mass percentage of different metal elements in the lead-free solder alloy. For example, "3.4Ag" indicates the mass percentage of silver element is 3.4%, "0.7Cu" indicates the mass percentage of copper element is 0.7%, "3.2Bi" indicates the mass percentage of bismuth element is 3.2%, and "3.0Sb" indicates the mass percentage of antimony element is 3.0%.

### Example 2

This example differs from Example 1 only in that the high-strength and thermal-fatigue-resistant lead-free solder alloy included the following components by mass: 8.97 kg tin, 0.36 kg silver, 0.06 kg copper, 0.33 kg bismuth, and 0.28 kg antimony.

The method for preparing the high-strength and thermal-fatigue-resistant lead-free solder alloy included:
pure tin blocks with a purity greater than 99.9%, silver grains, copper grains, bismuth blocks, and antimony blocks were used as raw materials;
the copper grains of the above mass and pure tin blocks with a mass 9 times that of the copper grains were taken, then placed into a vacuum furnace at 600 °C for melting and the temperature was held for 2 h, the melting was repeated twice to obtain Sn10Cu master alloy;
the antimony blocks of the above mass and pure tin blocks with a mass 9 times that of the antimony blocks were taken, then placed into a vacuum furnace at 600 °C for melting and the temperature was held for 2 h, the melting was repeated twice to obtain Sn10Sb master alloy;
the silver grains of the above mass, Sn10Cu master alloy, bismuth blocks, Sn10Sb master alloy and the remaining pure tin blocks were placed into a resistance furnace at 300 °C for heating; after the materials were melted, a resulting mixture was stirred and held for 1 h to obtain the high-strength and thermal-fatigue-resistant lead-free solder alloy Sn3.6Ag0.6Cu3.3Bi2.8Sb.

### Example 3

This example differs from Example 1 only in that the high-strength and thermal-fatigue-resistant lead-free solder alloy included the following components by mass: 8.99 kg tin, 0.25 kg silver, 0.1 kg copper, 0.35 kg bismuth, and 0.31 kg antimony.

The method for preparing the high-strength and thermal-fatigue-resistant lead-free solder alloy included:
pure tin blocks with a purity greater than 99.9%, silver grains, copper grains, bismuth blocks, and antimony blocks were used as raw materials;
the copper grains of the above mass and pure tin blocks with a mass 9 times that of the copper grains were taken, then placed into a vacuum furnace at 600 °C for melting and the temperature was held for 2 h, the melting was repeated twice to obtain Sn10Cu master alloy;
the antimony blocks of the above mass and pure tin blocks with a mass 9 times that of the antimony blocks were taken, then placed into a vacuum furnace at 600 °C for melting and the temperature was held for 2 h, the melting was repeated twice to obtain Sn10Sb master alloy;
the silver grains of the above mass, Sn10Cu master alloy, bismuth blocks, Sn10Sb master alloy and the remaining pure tin blocks were placed into a resistance furnace at 300 °C for heating; after the materials were melted, stirred and held for 1 h to obtain the high-strength and thermal-fatigue-resistant lead-free solder alloy Sn2.5Ag1.0Cu3.5Bi3.1Sb.

### Example 4

This example differs from Example 1 only in that the high-strength and thermal-fatigue-resistant lead-free solder alloy included the following components by mass: 8.90 kg tin, 0.32 kg silver, 0.08 kg copper, 0.30 kg bismuth, and 0.40 kg antimony.

The method for preparing the high-strength and thermal-fatigue-resistant lead-free solder alloy included:
pure tin blocks with a purity greater than 99.9%, silver grains, copper grains, bismuth blocks, and antimony blocks were used as raw materials;
the copper grains of the above mass and pure tin blocks with a mass 9 times that of the copper grains were taken, then placed into a vacuum furnace at 600 °C for melting and the temperature was held for 2 h, the melting was repeated twice to obtain Sn10Cu master alloy;
the antimony blocks of the above mass and pure tin blocks with a mass 9 times that of the antimony blocks were taken, then placed into a vacuum furnace at 600 °C for melting and the temperature was held for 2 h, the melting was repeated twice to obtain Sn10Sb master alloy;
the silver grains of the above mass, Sn10Cu master alloy, bismuth blocks, Sn10Sb master alloy and the remaining pure tin blocks were placed into a resistance furnace at 300 °C for heating; after the materials were melted, a resulting mixture was stirred and held for 1 h to obtain the high-strength and thermal-fatigue-resistant lead-free solder alloy Sn3.2Ag0.8Cu3.0Bi4.0Sb.

### Example 5

This example differs from Example 1 only in that the high-strength and thermal-fatigue-resistant lead-free solder alloy included the following components by mass: 8.93 kg tin, 0.4 kg silver, 0.1 kg copper, 0.32 kg bismuth, and 0.25 kg antimony.

The method for preparing the high-strength and thermal-fatigue-resistant lead-free solder alloy included:
pure tin blocks with a purity greater than 99.9%, silver grains, copper grains, bismuth blocks, and antimony blocks were used as raw materials;
the copper grains of the above mass and pure tin blocks with a mass 9 times that of the copper grains were taken, then placed into a vacuum furnace at 600 °C for melting and the temperature was held for 2 h, the melting was repeated twice to obtain Sn10Cu master alloy;
the antimony blocks of the above mass and pure tin blocks with a mass 9 times that of the antimony blocks were taken, then placed into a vacuum furnace at 600 °C for melting and the temperature was held for 2 h, the melting was repeated twice to obtain Sn10Sb master alloy;
the silver grains of the above mass, Sn10Cu master alloy, bismuth blocks, Sn10Sb master alloy and the remaining pure tin blocks were placed into a resistance furnace at 300 °C for heating; after the materials were melted, a resulting mixture was stirred and held for 1 h to obtain the high-strength and thermal-fatigue-resistant lead-free solder alloy Sn4.0Ag1.0Cu3.2Bi2.5Sb.

### Example 6

This example differs from Example 1 only in that the high-strength and thermal-fatigue-resistant lead-free solder alloy included the following components by mass: 8.964 kg tin, 0.34 kg silver, 0.07 kg copper, 0.32 kg bismuth, 0.3 kg antimony, 0.001 kg nickel, and 0.005 kg neodymium.

The method for preparing the high-strength and thermal-fatigue-resistant lead-free solder alloy included:
pure tin blocks with a purity greater than 99.9%, silver grains, copper grains, bismuth blocks, antimony blocks, nickel blocks, and neodymium blocks were used as raw materials;
the copper grains of the above mass and pure tin blocks with a mass 9 times that of the copper grains were taken, then placed into a vacuum furnace at 600 °C for melting and the temperature was held for 2 h, the melting was repeated twice to obtain Sn10Cu master alloy;
the antimony blocks of the above mass and pure tin blocks with a mass 9 times that of the copper grains were taken, then placed into a vacuum furnace at 600 °C for melting and the temperature was held for 2 h, the melting was repeated twice to obtain Sn10Sb master alloy;
the nickel blocks of the above mass and pure tin blocks with a mass 5 times that of the nickel blocks were taken, then placed into a vacuum furnace at 600 °C for melting and the temperature was held for 2 h, the melting was repeated twice to obtain Sn5Ni master alloy;
the silver grains of the above mass, Sn10Cu master alloy, bismuth blocks, Sn10Sb master alloy, Sn5Ni master alloy, neodymium blocks and the remaining pure tin blocks were placed into a resistance furnace at 300 °C for heating; after the materials were melted, a resulting mixture was stirred and held for 1 h to obtain the high-strength and thermal-fatigue-resistant lead-free solder alloy. The lead-free solder alloy in the present application can be represented as Sn3.4Ag0.7Cu3.2Bi3.0Sb0.05Nd0.01Ni.

### Example 7

This example differs from Example 6 only in that the high-strength and thermal-fatigue-resistant lead-free solder alloy included the following components by mass: 8.964 kg tin, 0.34 kg silver, 0.07 kg copper, 0.32 kg bismuth, 0.3 kg antimony, 0.001 kg nickel, and 0.005 kg lanthanum.

The method for preparing the high-strength and thermal-fatigue-resistant lead-free solder alloy included:
pure tin blocks with a purity greater than 99.9%, silver grains, copper grains, bismuth blocks, antimony blocks, nickel blocks, lanthanum blocks were used as raw materials;
the copper grains of the above mass and pure tin blocks with a mass 9 times that of the copper grains were taken, then placed into a vacuum furnace at 600 °C for melting and the temperature was held for 2 h, the melting was repeated twice to obtain Sn10Cu master alloy;
the antimony blocks of the above mass and pure tin blocks with a mass 9 times that of the copper grains were taken, then placed into a vacuum furnace at 600 °C for melting and the temperature was held for 2 h, the melting was repeated twice to obtain Sn10Sb master alloy;
the nickel blocks of the above mass and pure tin blocks with a mass 5 times that of the nickel blocks were taken, then placed into a vacuum furnace at 600 °C for melting and the temperature was held for 2 h, the melting was repeated twice to obtain Sn5Ni master alloy;
the silver grains of the above mass, Sn10Cu master alloy, bismuth blocks, Sn10Sb master alloy, Sn5Ni master alloy, lanthanum blocks and the remaining pure tin blocks were placed into a resistance furnace at 300 °C for heating; after the materials were melted, a resulting mixture was stirred and held for 1 h to obtain the high-strength and thermal-fatigue-resistant lead-free solder alloy. The lead-free solder alloy in the present application can be represented as Sn3.4Ag0.7Cu3.2Bi3.0Sb0.05La0.01Ni.

### Example 8

This example differs from Example 6 only in that the high-strength and thermal-fatigue-resistant lead-free solder alloy included the following components by mass: 8.964 kg tin, 0.34 kg silver, 0.07 kg copper, 0.32 kg bismuth, 0.3 kg antimony, 0.001 kg nickel, and 0.005 kg plutonium.

The method for preparing the high-strength and thermal-fatigue-resistant lead-free solder alloy included:
pure tin blocks with a purity greater than 99.9%, silver grains, copper grains, bismuth blocks, antimony blocks, nickel blocks, and plutonium blocks were used as raw materials;
the copper grains of the above mass and pure tin blocks with a mass 9 times that of the copper grains were taken, then placed into a vacuum furnace at 600 °C for melting and the temperature was held for 2 h, the melting was repeated twice to obtain Sn10Cu master alloy;
the antimony blocks of the above mass and pure tin blocks with a mass 9 times that of the copper grains were taken, then placed into a vacuum furnace at 600 °C for melting and the temperature was held for 2 h, the melting was repeated twice to obtain Sn10Sb master alloy;
the nickel blocks of the above mass and pure tin blocks with a mass 5 times that of the nickel blocks were taken, then placed into a vacuum furnace at 600 °C for melting and the temperature was held for 2 h, the melting was repeated twice to obtain Sn5Ni master alloy;
the silver grains of the above mass, Sn10Cu master alloy, bismuth blocks, Sn10Sb master alloy, Sn5Ni master alloy, plutonium blocks and the remaining pure tin blocks were placed into a resistance furnace at 300 °C for heating; after the materials were melted, a resulting mixture was stirred and held for 1 h to obtain the high-strength and thermal-fatigue-resistant lead-free solder alloy. The lead-free solder alloy in the present application can be represented as Sn3.4Ag0.7Cu3.2Bi3.0Sb0.05Pu0.01Ni.

### Example 9

This example differs from Example 6 only in that the high-strength and thermal-fatigue-resistant lead-free solder alloy included the following components by mass: 8.964 kg tin, 0.34 kg silver, 0.07 kg copper, 0.32 kg bismuth, 0.3 kg antimony, 0.001 kg nickel, and 0.005 kg yttrium.

The method for preparing the high-strength and thermal-fatigue-resistant lead-free solder alloy included:
pure tin blocks with a purity greater than 99.9%, silver grains, copper grains, bismuth blocks, antimony blocks, nickel blocks, yttrium blocks were used as raw materials;
the copper grains of the above mass and pure tin blocks with a mass 9 times that of the copper grains were taken, then placed into a vacuum furnace at 600 °C for melting and the temperature was held for 2 h, the melting was repeated twice to obtain Sn10Cu master alloy;
the antimony blocks of the above mass and pure tin blocks with a mass 9 times that of the copper grains were taken, then placed into a vacuum furnace at 600 °C for melting and the temperature was held for 2 h, the melting was repeated twice to obtain Sn10Sb master alloy;
the nickel blocks of the above mass and pure tin blocks with a mass 5 times that of the nickel blocks were taken, then placed into a vacuum furnace at 600 °C for melting and the temperature was held for 2 h, the melting was repeated twice to obtain Sn5Ni master alloy;
the silver grains of the above mass, Sn10Cu master alloy, bismuth blocks, Sn10Sb master alloy, Sn5Ni master alloy, yttrium blocks and the remaining pure tin blocks were placed into a resistance furnace at 300 °C for heating; after the materials were melted, a resulting mixture was stirred and held for 1 h to obtain the high-strength and thermal-fatigue-resistant lead-free solder alloy. The lead-free solder alloy in the present application can be represented as Sn3.4Ag0.7Cu3.2Bi3.0Sb0.05Y0.01Ni.

### Example 10

This example differs from Example 6 only in that the high-strength and thermal-fatigue-resistant lead-free solder alloy included the following components by mass: 8.967 kg tin, 0.34 kg silver, 0.07 kg copper, 0.32 kg bismuth, 0.3 kg antimony, 0.001 kg nickel, and 0.002 kg neodymium.

### Example 11

This example differs from Example 6 only in that the high-strength and thermal-fatigue-resistant lead-free solder alloy included the following components by mass: 8.965 kg tin, 0.34 kg silver, 0.07 kg copper, 0.32 kg bismuth, 0.3 kg antimony, 0.001 kg nickel, and 0.004 kg neodymium.

### Example 12

This example differs from Example 6 only in that the high-strength and thermal-fatigue-resistant lead-free solder alloy included the following components by mass: 8.963 kg tin, 0.34 kg silver, 0.07 kg copper, 0.32 kg bismuth, 0.3 kg antimony, 0.001 kg nickel, and 0.006 kg neodymium.

### Example 13

This example differs from Example 6 only in that the high-strength and thermal-fatigue-resistant lead-free solder alloy included the following components by mass: 8.959 kg tin, 0.34 kg silver, 0.07 kg copper, 0.32 kg bismuth, 0.3 kg antimony, 0.001 kg nickel, and 0.01 kg neodymium.

### Example 14

This example differs from Example 6 only in that the high-strength and thermal-fatigue-resistant lead-free solder alloy included the following components by mass: 8.945 kg tin, 0.34 kg silver, 0.07 kg copper, 0.32 kg bismuth, 0.3 kg antimony, 0.002 kg nickel, and 0.005 kg neodymium.

### Example 15

This example differs from Example 6 only in that the high-strength and thermal-fatigue-resistant lead-free solder alloy included the following components by mass: 8.945 kg tin, 0.34 kg silver, 0.07 kg copper, 0.32 kg bismuth, 0.3 kg antimony, 0.005 kg nickel, and 0.005 kg neodymium.

### Example 16

This example differs from Example 1 only in that the high-strength and thermal-fatigue-resistant lead-free solder alloy included the following components by mass: 8.966 kg tin, 0.34 kg silver, 0.07 kg copper, 0.32 kg bismuth, 0.3 kg antimony, 0.003 kg manganese, and 0.001 kg cobalt.

The method for preparing the high-strength and thermal-fatigue-resistant lead-free solder alloy included:
pure tin blocks with a purity greater than 99.9%, silver grains, copper grains, bismuth blocks, antimony blocks, manganese blocks, and cobalt blocks were used as raw materials;
the copper grains of the above mass and pure tin blocks with a mass 9 times that of the copper grains were taken, then placed into a vacuum furnace at 600 °C for melting and the temperature was held for 2 h, the melting was repeated twice to obtain Sn10Cu master alloy;
the antimony blocks of the above mass and pure tin blocks with a mass 9 times that of the copper grains were taken, then placed into a vacuum furnace at 600 °C for melting and the temperature was held for 2 h, the melting was repeated twice to obtain Sn10Sb master alloy;
the manganese blocks of the above mass and pure tin blocks with a mass 2 times that of the nickel blocks were taken, then placed into a vacuum furnace at 600 °C for melting and the temperature was held for 2 h, the melting was repeated twice to obtain Sn2Mn master alloy;
the cobalt blocks of the above mass and pure tin blocks with a mass 2 times that of the nickel blocks were taken, then placed into a vacuum furnace at 600 °C for melting and the temperature was held for 2 h, the melting was repeated twice to obtain Sn2Co master alloy;
the silver grains of the above mass, Sn10Cu master alloy, bismuth blocks, Sn10Sb master alloy, Sn2Mn master alloy, Sn2Co master alloy and the remaining pure tin blocks were placed into a resistance furnace at 300 °C for heating; after the materials were melted, a resulting mixture was stirred and held for 1 h to obtain the high-strength and thermal-fatigue-resistant lead-free solder alloy. The lead-free solder alloy in the present application can be represented as Sn3.4Ag0.7Cu3.2Bi3.0Sb0.03Mn0.01Co.

### Example 17

This example differs from Example 16 only in that the high-strength and thermal-fatigue-resistant lead-free solder alloy included the following components by mass: 8.966 kg tin, 0.34 kg silver, 0.07 kg copper, 0.32 kg bismuth, 0.3 kg antimony, 0.003 kg manganese, and 0.001 kg titanium.

The method for preparing the high-strength and thermal-fatigue-resistant lead-free solder alloy included:
pure tin blocks with a purity greater than 99.9%, silver grains, copper grains, bismuth blocks, antimony blocks, manganese blocks, titanium blocks were used as raw materials;
the copper grains of the above mass and pure tin blocks with a mass 9 times that of the copper grains were taken, then placed into a vacuum furnace at 600 °C for melting and the temperature was held for 2 h, the melting was repeated twice to obtain Sn10Cu master alloy;
the antimony blocks of the above mass and pure tin blocks with a mass 9 times that of the copper grains were taken, then placed into a vacuum furnace at 600 °C for melting and the temperature was held for 2 h, the melting was repeated twice to obtain Sn10Sb master alloy;
the manganese blocks of the above mass and pure tin blocks with a mass 2 times that of the nickel blocks were taken, then placed into a vacuum furnace at 600 °C for melting and the temperature was held for 2 h, the melting was repeated twice to obtain Sn2Mn master alloy;
the silver grains of the above mass, Sn10Cu master alloy, bismuth blocks, Sn10Sb master alloy, Sn2Mn master alloy, titanium blocks and the remaining pure tin blocks were placed into a resistance furnace at 300 °C for heating; after the materials were melted, a resulting mixture was stirred and held for 1 h to obtain the high-strength and thermal-fatigue-resistant lead-free solder alloy. The lead-free solder alloy in the present application can be represented as Sn3.4Ag0.7Cu3.2Bi3.0Sb0.03Mn0.01Ti.

### Example 18

This example differs from Example 16 only in that the high-strength and thermal-fatigue-resistant lead-free solder alloy included the following components by mass: 8.965 kg tin, 0.34 kg silver, 0.07 kg copper, 0.32 kg bismuth, 0.3 kg antimony, 0.003 kg manganese, and 0.002 kg cobalt.

### Example 19

This example differs from Example 16 only in that the high-strength and thermal-fatigue-resistant lead-free solder alloy included the following components by mass: 8.962 kg tin, 0.34 kg silver, 0.07 kg copper, 0.32 kg bismuth, 0.3 kg antimony, 0.003 kg manganese, and 0.005 kg cobalt.

### Example 20

This example differs from Example 16 only in that the high-strength and thermal-fatigue-resistant lead-free solder alloy included the following components by mass: 8.968 kg tin, 0.34 kg silver, 0.07 kg copper, 0.32 kg bismuth, 0.3 kg antimony, 0.001 kg manganese, and 0.001 kg cobalt.

### Example 21

This example differs from Example 16 only in that the high-strength and thermal-fatigue-resistant lead-free solder alloy included the following components by mass: 8.967 kg tin, 0.34 kg silver, 0.07 kg copper, 0.32 kg bismuth, 0.3 kg antimony, 0.002 kg manganese, and 0.001 kg cobalt.

### Example 22

This example differs from Example 16 only in that the high-strength and thermal-fatigue-resistant lead-free solder alloy included the following components by mass: 8.965 kg tin, 0.34 kg silver, 0.07 kg copper, 0.32 kg bismuth, 0.3 kg antimony, 0.004 kg manganese, and 0.001 kg cobalt.

### Example 23

This example differs from Example 16 only in that the high-strength and thermal-fatigue-resistant lead-free solder alloy included the following components by mass: 8.959 kg tin, 0.34 kg silver, 0.07 kg copper, 0.32 kg bismuth, 0.3 kg antimony, 0.01 kg manganese, and 0.001 kg cobalt.

### Comparative Examples

### Comparative Example 1

This comparative example provides a lead-free solder alloy, which included 7.5 kg tin, 0.25 kg silver, 0.25 kg copper, and 2.0 kg indium. The method for preparing the lead-free solder alloy included:
pure tin blocks with a purity greater than 99.9%, silver grains, copper grains, indium blocks were used as raw materials;
the copper grains of the above mass and pure tin blocks with a mass 9 times that of the copper grains were taken, then placed into a vacuum furnace at 600 °C for melting and the temperature was held for 2 h, the melting was repeated twice to obtain Sn10Cu master alloy;
the silver grains of the above mass, Sn10Cu master alloy, indium blocks and the remaining pure tin blocks were placed into a resistance furnace at 300 °C for heating; after the materials were melted, a resulting mixture was stirred and held for 1 h to obtain the lead-free solder alloy.

### Comparative Example 2

This comparative example discloses a lead-free solder alloy, which included 9.2 kg tin, 0.3 kg silver, and 0.5 kg copper. The method for preparing the lead-free solder alloy includeg:
pure tin blocks with a purity greater than 99.9%, silver grains, copper grains were used as raw materials;
the copper grains of the above mass and pure tin blocks with a mass 9 times that of the copper grains were taken, then placed into a vacuum furnace at 600 °C for melting and the temperature was held for 2 h, the melting was repeated twice to obtain Sn10Cu master alloy;
the silver grains of the above mass, Sn10Cu master alloy and the remaining pure tin blocks were placed into a resistance furnace at 300 °C for heating; after the materials were melted, a resulting mixture was stirred and held for 1 h to obtain the lead-free solder alloy.

### Comparative Example 3

This comparative example discloses a lead-free solder alloy, which included 9.5 kg tin and 0.5 kg antimony.

The method for preparing the lead-free solder alloy included:
pure tin blocks with a purity greater than 99.9% and antimony blocks were uses as raw materials;
the antimony blocks of the above mass and pure tin blocks with a mass 9 times that of the copper grains were taken, then placed into a vacuum furnace at 600 °C for melting and the temperature was held for 2 h, the melting was repeated twice to obtain Sn10Sb master alloy;
the Sn10Sb master alloy and the remaining pure tin blocks were placed into a resistance furnace at 300 °C for heating; after the materials were melted, a resulting mixture was stirred and held for 1 h to obtain the lead-free solder alloy.

### Performance detection test

The tensile strength of the lead-free solder alloys prepared in the above examples and comparative examples at 25°C and 125°C was detected using a material testing machine, respectively. The lead-free solder alloys prepared in the above examples and comparative examples were subjected to a hot-air cycling treatment: after welding, cycling for 1000 times from -40 °C to +125 °C, holding at high temperature and low temperature for 30 min each; then the tensile strength was detected again. The test results are summarized in Table 1.

**Table 1**

| | Tensile strength (MPa) | | Tensile strength after thermal cycling (MPa) |
|---|---|---|---|
| | 25 °C | 125 °C | |
| Example 1 | 87 | 54 | 65 |
| Example 2 | 85 | 53 | 62 |
| Example 3 | 83 | 51 | 60 |
| Example 4 | 84 | 53 | 63 |
| Example 5 | 81 | 50 | 61 |
| Example 6 | 92 | 55 | 71 |
| Example 7 | 89 | 54 | 70 |
| Example 8 | 93 | 53 | 68 |
| Example 9 | 90 | 53 | 70 |
| Example 10 | 89 | 54 | 69 |
| Example 11 | 91 | 56 | 69 |
| Example 12 | 91 | 55 | 68 |
| Example 13 | 88 | 55 | 67 |
| Example 14 | 91 | 55 | 69 |
| Example 15 | 89 | 54 | 67 |
| Example 16 | 94 | 56 | 72 |
| Example 17 | 92 | 54 | 70 |
| Example 18 | 93 | 56 | 69 |
| Example 19 | 90 | 54 | 68 |
| Example 20 | 89 | 54 | 70 |
| Example 21 | 91 | 55 | 72 |
| Example 22 | 92 | 55 | 71 |
| Example 23 | 90 | 53 | 69 |
| Comparative Example 1 | 43 | 22 | 36 |
| Comparative Example 2 | 41 | 25 | 36 |
| Comparative Example 3 | 38 | 25 | 35 |

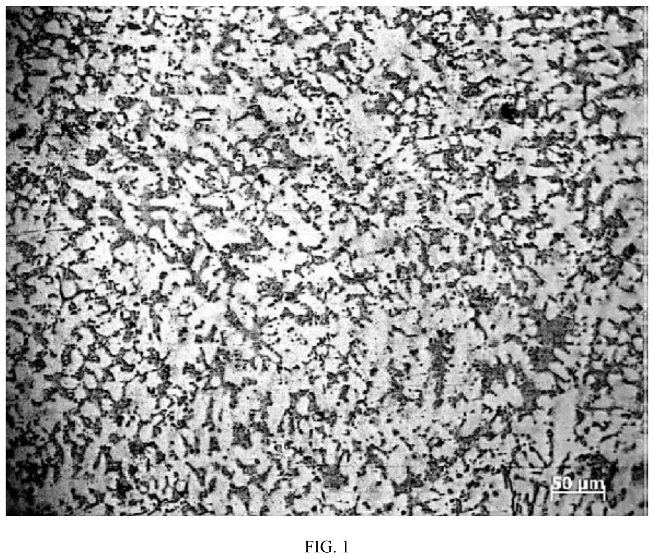

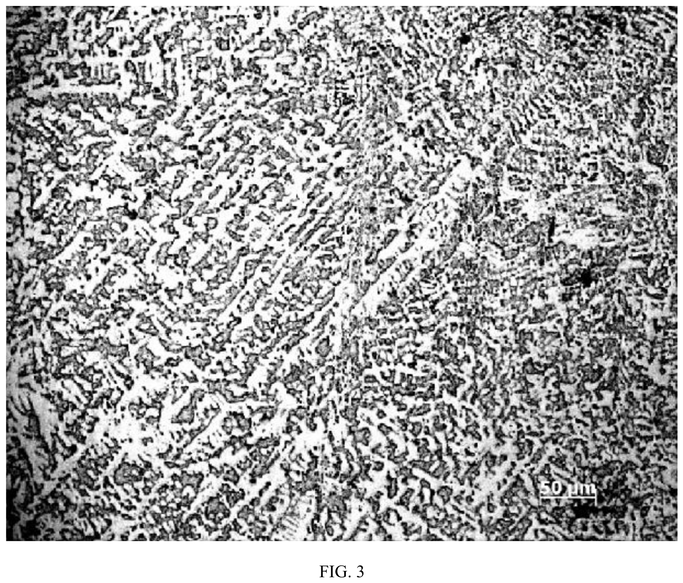

Referring to FIGs. 1 and 3, the microstructures of the lead-free solder alloys prepared in Examples 6 and 16 were observed with an electron microscope, showing that the microstructures of the high-strength and thermal-fatigue-resistant lead-free solder alloys of Examples 6 and 16 are relatively fine and uniform.

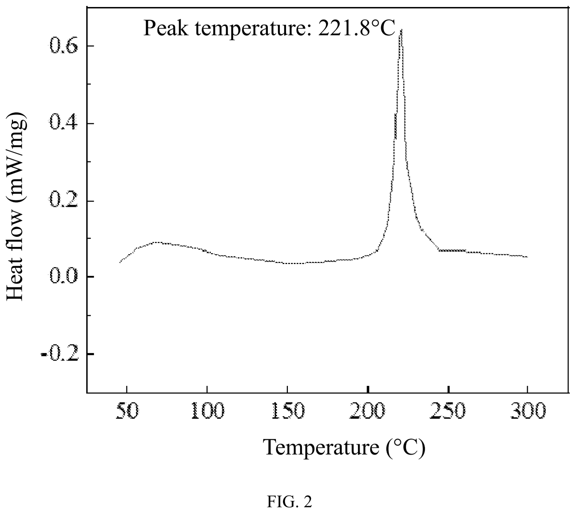

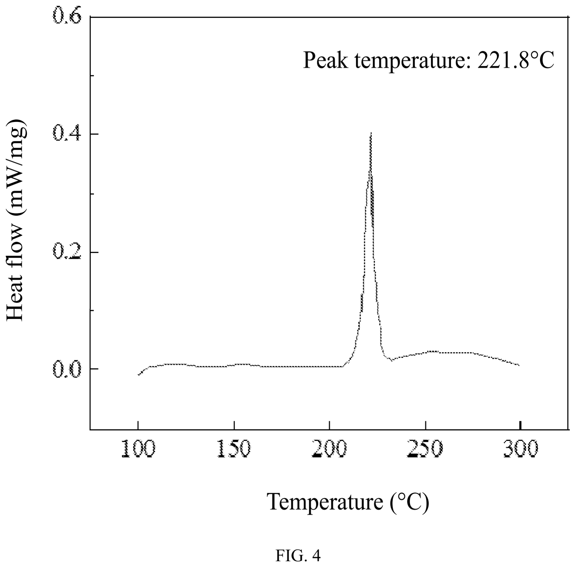

Referring to FIGs. 2 and 4, the melting points of the lead-free solder alloys prepared in Examples 6 and 16 were measured using a DSC2910 differential scanning calorimeter (TA Instrument) to perform melting temperature analysis, with the process parameters set according to the JIS-Z3198 standard. The melting points of the high-strength and thermal-fatigue-resistant lead-free solder alloys in Examples 6 and 16 were both 221.8 °C.

It can be seen from the combination of Example 1, Comparative Examples 1-3, and Table 1 that the lead-free solder alloy disclosed in the present application has excellent tensile strength and thermal fatigue resistance, good high-temperature tensile strength, and good thermal stability, enabling it to be applied in high-temperature scenarios.

It can be seen from the combination of Examples 1-5 and Table 1 that the Sn3.4Ag0.7Cu3.2Bi3.0Sb has good high-temperature mechanical strength stability and thermal fatigue resistance.

It can be seen from the combination of Examples 6-9 and Table 1 that the selection of nickel element in combination with neodymium element as the solder joint/interface control elements enables the lead-free solder alloy to have more balanced mechanical properties and thermal fatigue resistance.

It can be seen from the combination of Example 6, Examples 10-15, and Table 1 that Sn3.4Ag0.7Cu3.2Bi3.0Sb0.05Nd0.01Ni has better and more balanced high-temperature mechanical reliability and thermal fatigue resistance.

It can be seen from the combination of Examples 16-17 and Table 1 that the selection of manganese element in combination with cobalt element as the solder joint/interface control elements enables the lead-free solder alloy to have better tensile strength and thermal fatigue resistance.

It can be seen from the combination of Example 16, Examples 18-23, and Table 1 that the Sn3.4Ag0.7Cu3.2B13.0Sb0.03Mn0.01Co has better and more balanced high-temperature mechanical reliability and thermal fatigue resistance.

The specific embodiment are merely an explanation of the present application and are not a limitation of the present application. Those skilled in the art can make non-creative modifications to the embodiment as needed after reading this specification, but as long as they are within the scope of the claims of the present application, they are protected by patent law.

## Claims

1. A high-strength and thermal-fatigue-resistant lead-free solder alloy, **characterized by** comprising the following components by mass percentage:
2.5-4% of silver;
0.5-1% of copper;
3-3.5% of bismuth;
2.5-4% of antimony;
and further comprising:
0.01-0.05% of nickel and 0.04-0.1% of neodymium; or/and, 0.02-0.1% of manganese and 0.01-0.05% of cobalt;
and the balance being tin and any unavoidable impurities.

2. The high-strength and thermal-fatigue-resistant lead-free solder alloy according to claim 1, **characterized in that** the mass percentage of the nickel is 0.01-0.02%, and the mass percentage of the neodymium is 0.04-0.06%.

3. The high-strength and thermal-fatigue-resistant lead-free solder alloy according to claim 1, **characterized in that** the mass percentage of the manganese is 0.02-0.04%, and the mass percentage of the cobalt is 0.01-0.02%.

4. The high-strength and thermal-fatigue-resistant lead-free solder alloy according to claim 1, **characterized in that** a melting point of the high-strength and thermal-fatigue-resistant lead-free solder alloy is 200-250 °C.

5. The high-strength and thermal-fatigue-resistant lead-free solder alloy according to claim 1, **characterized in that** a tensile strength of the high-strength and thermal-fatigue-resistant lead-free solder alloy is not less than 80 MPa at 25 °C and not less than 50 MPa at 125 °C.

6. A method for preparing the high-strength and thermal-fatigue-resistant lead-free solder alloy according to any one of claims 1-5, **characterized by** comprising the following steps:
mixing the components according to the mass percentages, melting, and performing heat preservation and stirring on a resulting mixture to obtain the high-strength and thermal-fatigue-resistant lead-free solder alloy.
